# EUROPÄISCHE PATENTSCHRIFT

(11) **EP 3 541 628 B1**
(45) Veröffentlichungstag und Bekanntmachung des Hinweises auf die Patenterteilung: **21.02.2024**
(21) Anmeldenummer: 17809175.7
(22) Anmeldetag: 08.11.2017
(51) Int. Cl.: B33Y 40/00, B41J 2/165, B29C 64/35

(54) **INTEGRIERTE DRUCKKOPFWARTUNGSSTATION FÜR DAS PULVERBETTBASIERTE 3D-DRUCKEN**
INTEGRATED PRINT HEAD MAINTENANCE STATION FOR POWDER BED-BASED 3D PRINTING
STATION D'ENTRETIEN DE TÊTE D'IMPRESSION INTÉGRÉE POUR L'IMPRESSION EN 3D SUR LIT DE POUDRE

(30) Priorität: 15.11.2016 DE 102016013610
(43) Veröffentlichungstag der Anmeldung: 25.09.2019
(73) Patentinhaber: voxeljet AG, 86316 Friedberg (DE)
(72) Erfinder: GÜNTHER, Daniel, 81371 München (DE); WEHRMANN, Christian, 77815 Vimbuch (DE); MÜHLBAUER, Wolfgang, 86163 Augsburg (DE)
(74) Vertreter: Hoefer & Partner Patentanwälte mbB
(86) Internationale Anmeldenummer: PCT/DE2017/000375
(87) Internationale Veröffentlichungsnummer: WO 2018/091007

(56) Entgegenhaltungen:
- US-A- 6 135 585
- US-A- 6 158 838
- US-A1- 2002 186 270
- US-A1- 2002 186 270
- US-A1- 2016 311 225
- US-B1- 6 511 155
- US-B1- 6 511 155

## Beschreibung

Die Erfindung bezieht sich auf eine Parkeinheit für Druckköpfe gemäß dem Oberbegriff des Patentanspruches 1.

### Gebiet der Erfindung

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden.

Das 3D-Drucken auf Basis pulverförmiger Werkstoffe und Eintrag flüssiger Binder ist unter den Schichtbautechniken das schnellste Verfahren. Mit diesem Verfahren lassen sich verschiedene Partikelmaterialien, dazu zählen - nicht erschöpfend - natürliche biologische Rohstoffe, polymere Kunststoffe, Metalle, Keramiken und Sande verarbeiten.

Der Druckkopf bei dem oben genannten Verfahren stellt ein zentrales Element der Vorrichtung und des Verfahrens dar. Die Zuverlässigkeit der Maschine hängt direkt mit der Zuverlässigkeit der Tropfenerzeugung zusammen.

Der Druckkopf ist, um eine hohe Leistung im Prozess zu erreichen, aus einer Vielzahl von Düsen aufgebaut. Diese Düsen sind mikrotechnische Aktoren, die in Lage sind, das Fluid in einzelnen Tropfen in Richtung Baufeld zu beschleunigen.

Die Funktion Tropfen zu erzeugen wird bei den Druckköpfen des Standes der Technik durch Piezoelemente erreicht. Diese sind um eine Pumpkammer angeordnet und können, angeregt über ein elektrisches Signal das Volumen eben dieser Kammer schlagartig ändern. Die Kammer ist üblicherweise mit Flüssigkeit gefüllt und steht mit einem Düsenkanal und einer Düse in Verbindung. Durch die schlagartige Volumenänderung kann ein Tropfen durch diese Düse ausgestoßen werden.

Die beschriebene mikrotechnische Anordnung ist sehr empfindlich für Störungen. Bespielweise mindert Luft in der Pumpkammer die Funktion dramatisch. Kleinste Luftmengen verhindern den Tropfenausstoß. Ebenso reagiert das System empfindlich auf Verschmutzungen. Diese können die Tropfenbildung verhindern, wenn sie in den Kanälen sind, oder die Flugbahn des Tropfens negativ beeinflussen.

Um die Tropfenbildungsfunktion zu gewährleisten, werden im Stand der Technik verschiedene Maßnahmen während und nach dem eigentlichen Drucken ergriffen: Vor dem Drucken wird der Druckkopf gespült ("Purging"), um evtl. in den Pumpkammern vorhandene Luft heraus zu spülen. Danach ist es im Allgemeinen hilfreich, den Druckkopf zu reinigen. Das Reinigen dient zum Einen dem Entfernen der am Druckkopf hängenden Tropfen. Zum Zweiten können durch eine berührende Reinigung Partikel oder sonstige Anhaftungen entfernt werden. Danach findet im Allgemeinen noch das sogenannte Spitting statt. Dies entspricht dem eigentlichen Drucken, aber noch nicht im Produktbereich, so dass evtl. durch die Reinigung an den Druckkopf gelangtes Reinigungsfluid nicht bei der Bauteilerzeugung durch das 3D-Drucken wirksam wird.

Eine weitere wichtige Funktion ist das "Capping". Diese Funktion schützt den Druckkopf vor und nach dem eigentlichen Druckprozess vor dem Austrocknen und dem Zutritt von Fremdmaterialien.

Nach dem Stand der Technik ist für diese Funktion eine Vielzahl von Vorrichtungsteilen an unterschiedlichen Orten der Maschine angeordnet. Jedes Vorrichtungsteil hat dabei technische Unterfunktionsteile, die die jeweilige Funktion vor Beschädigung von außen schützen. Meist sind bewegliche Teile vorhanden, die über Aktoren angesteuert werden.

Alle einzelnen Elemente der Druckkopfwartungseinheit sind anfällig für Verschmutzungen und für Fehlfunktionen.

In der US2002/0186270 A1 wird ein selbstreinigender Druckkopf beschrieben, der eine unter Druck stehende Reinigungsflüssigkeit verwendet sowie ein Flüssigkeitsreservoir. Eine Parkeinheit, die eine Wanne aufweist und wobei die Parkeinheit Federn oder Spiralfedern zur Befestigung aufweist wird in dieser Druckschrift weder offenbart noch nahegelegt.

Deshalb ist eine Aufgabe der vorliegenden Erfindung, eine Vorrichtung bereitzustellen, die weniger empfindlich oder unempfindlich gegenüber Schmutz, Verklebungen und Verunreinigungen ist oder die Nachteile des Standes der Technik zumindest teilweise oder ganz zu vermeiden. Eine weitere Aufgabe der vorliegenden Erfindung ist es die Nachteile der bekannten unterschiedlichen Capping-Stationen zumindest zu vereinfachen.

### Kurze Zusammenfassung der Erfindung

Die Lösung der Aufgabe wird bereitgestellt durch eine Vorrichtung nach Anspruch 1 gelöst.

Zum Schutz des Druckkopfes bei schichtweiser Fertigung mittels des Binder-Jetting-Verfahrens wirken zur Erhaltung der Druckkopffunktion notwendige Elemente in einem durch eine Spaltdichtung teilweise abgedichteten Raum.

Dieser Raum wird durch eine Wand begrenzt, die die Form einer Wanne aufweist. Gegenüber dem Druckkopf weist die Oberkante der Wanne einen gewissen Abstand auf. Der Druckkopf kann, ohne dass die Wanne bewegt werden muss, durch kartesische Bewegungen in den Wirkungsbereich der integrierten Wartungseinheit gebracht werden.

### Ausführungsformen und Aspekte der Erfindung

Im Folgenden werden einige Begriffe der Erfindung näher erläutert.

Im Sinne der Erfindung sind "3D-Druckverfahren" alle aus dem Stand der Technik bekannten Verfahren, die den Aufbau von Bauteilen in dreidimensionalen Formen ermöglichen und mit den beschriebenen Verfahrenskomponenten und Vorrichtungen kompatibel sind.

"Selektiver Binderauftrag" oder "Selektiver Bindersystemauftrag" kann im Sinne der Erfindung nach jedem Partikelmaterialauftrag erfolgen oder je nach den Erfordernissen des Formkörpers und zur Optimierung der Formkörperherstellung auch unregelmäßig erfolgen, d.h. nicht linear und parallel nach jedem Partikelmaterialauftrag. "Selektiver Binderauftrag" oder "Selektiver Bindersystemauftrag" kann vorzugsweise individuell und im Verlauf der Formkörperherstellung eingestellt werden.

"Formkörper" oder "Bauteil" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

Als "Vorrichtung" zum Durchführen des Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile, Dosiervorrichtung und Wärmemittel, UV-Lampen und andere dem Fachmann bekannte Bauteile, die deshalb hier nicht näher ausgeführt werden.

Als "Partikelmaterialien" können alle für den pulverbasierten 3D Druck bekannten Materialien verwendet werden, insbesondere Sande, Keramikpulver, Metallpulver, Kunststoffe, Holzpartikel, Faserwerkstoffe, Cellulosen oder/und Lactosepulver. Das Partikelmaterial ist vorzugsweise ein trocken frei fließendes, aber auch ein kohäsives schnittfestes Pulver kann verwendet werden.

"Bauraum" ist der geometrische Ort, in dem die Partikelmaterialschüttung während des Bauprozesses durch wiederholtes Beschichten mit Partikelmaterial wächst. Im Allgemeinen wird der Bauraum durch einen Boden, die Bauplattform, durch Wände und eine offene Deckfläche, die Bauebene, begrenzt.

"IR-Erwärmung" bedeutet in dieser Schrift eine Bestrahlung des Baufeldes mit einem IR-Strahler. Dabei kann der Strahler statisch sein oder mit einer Verfahreinheit über das Baufeld bewegt werden. Die Begriffe Trocknung und Härtung sind nicht synonym zu verstehen.

Unter "Trocknung" wird ein Verlust von Wasser eines bestimmten Volumens verstanden. Diese Trocknung kommt durch Abgabe von Feuchte an die Umgebungsluft zustande. Die Trocknung ist mit einer Härtung verbunden.

"Härtung" ist der Begriff für den Anstieg der Festigkeit eines Bauteils. Die Härtung bei wasserglasbasierten Systemen kann über Trocknung oder chemische Härtung erfolgen.

Unter "Lösen" wird der Vorgang verstanden, dass durch eine lösemittelbasierte Flüssigkeit dein vormals fester Bestandteil in Lösung geht. Dabei ist der Löseprozess von verschiedenen Faktoren abhängig. Darunter sind die Einwirkdauer, die Temperatur, die relative Lösemittelmenge und der Feststofftyp.

"Druckkopf" bezeichnet bei dieser Erfindung einen Vorrichtungsteil, der zum Baufeld hin eine Fläche aufweist, die Mikrodüsen enthält, mit denen Tropfen gezielt auf das Baufeld abgeben können. Die Düsen befinden sich in einem Bereich der Fläche, der vom Rand der Fläche einen gewissen Abstand aufweist. Die Fläche ist im Wesentlichen gegenüber Dämpfen oder Flüssigkeiten dicht oder weist nur geringe Spalten auf. Ebenso kann der Druckkopf oberhalb der Fläche im Wesentlichen dicht ausgeführt sein.

"Düse" bezeichnet eine Öffnung im Druckkopf, aus der gezielt Tropfen abgegeben werden können. Eine Düse ist im Allgemeinen sehr klein. Im erfindungsgemäßen Verfahren und der Vorrichtung werden Düsen mit einem Durchmesser von 10-300 µm betrachtet.

"Meniskus" bezeichnet den Flüssigkeitsspiegel in einer Düse im Bereitschaftszustand. Er wird durch einen gewissen Unterdruck im Fluidsystem und der Oberflächenspannung der Flüssigkeit definiert.

Ein "Lufteinschluß" ist Luft im Fluidsystem in der Nähe der Düse. Ein solcher kann z.B. durch Abdampfen von Fluid entstehen. Im Bereich des Lufteinschlusses können Binder oder Bestandteile des Fluid verfestigen oder die Korrosion durch Luftzutritt begünstigt werden.

"Capping" ist im Sinne dieser Erfindung eine Funktion, die den Druckkopf während der "Nichtbenutzung" vor einer Veränderung schützt. Meist ist es eine Aufgabe des Cappings ein Austrocknen des Binders zu verhindern und den Druckkopf bis zu seiner nächsten Druckfahrt funktionsfähig zu halten.

Eine "Dichtung" ist im Sinne der Erfindung ein kontaktierendes Element, das den Luftaustausch zwischen der Umgebung und dem Capping-Schwamm verhindert.

Ein "Stempel" bezeichnet hier ein bewegliches Element, das von unten in Richtung Druckkopf bewegt werden kann.

Ein "Schwamm" oder "Capping-Schwamm" im Sinne der Erfindung ist eine offenporige Struktur, die Fluid binden kann. Dabei wird das Fluid durch Kapillarwirkung im Schwamm gehalten. Beim Stand der Technik wird ein Schwamm an den Druckkopf gedrückt.

Erfindungsgemäß wird durch eine nicht-berührende Dichtung (Spaltdichtung) ein Austrocknen des Druckkopfes beim Capping verhindert. Ein "Dichtungsspalt" reduziert den Austausch von Dampf zwischen den Räumen des Systems. Als Spalt wird hier der Abstand zweier Strukturen von kleiner 5 mm angesehen.

Als "Schwappschutz" wird eine Abdeckung nahe des Flüssigkeitsspiegels verstanden, die verhindert, dass große Mengen Flüssigkeit bei Anregung in Bewegung geraten und evtl. empfindliche Teile des Druckkopfes, wie die Elektronik, erreichen können.

Ein "Überlauf-Siphon" ist ein Rohr, das in der Capping-Wanne verbaut ist. Es ragt beispielsweise von unten in die Flüssigkeit hinein. Ein Flüssigkeitsstand oberhalb des Überlauf-Siphons läuft durch das Siphon ab. Damit regelt sich der Fluidpegel zumindest oberhalb des Siphons von selbst ein.

"Wischlippe" ist ein Abstreifelement, das passiv ist, und wenn der Druckkopf es überfährt und es dabei berührt, wird Flüssigkeit, die sich am unteren Ende des Druckkopfes befindet, aufgeschoben und somit der Druckkopf trockengewischt und gegebenenfalls auch Verunreinigungen entfernt.

Die "Spitting-Struktur" ist ein Element, das dazu geeignet ist, frei fliegende Tropfen, wie sie der Druckkopf erzeugt, aufzufangen, bevor sie als Aerosol unkontrollierbar Luftströmungen in der Vorrichtung zum 3D-Drucken folgen.

Die Erfindung betrifft im Weiteren die folgenden Aspekte und bevorzugte Ausführungsformen.

In einem Aspekt betrifft die Erfindung eine Parkeinheit nach Anspruch 1.

In einem weiteren Aspekt betrifft die Erfindung eine Parkeinheit, wobei der Druckkopf in seiner in die Parkseinheit eingefahrenen Position die Komponenten der Parkeinheit im Wesentlichen nicht berührt und die eine Spaltdichtung aufweist.

Die Parkeinheit kann weiterhin, dadurch gekennzeichnet sein, dass sievorzugsweise einen Flüssigkeitszu- und ablauf und/oder einen Schwappschutz oder/und ein Spitting-Struktur aufweist.

Die Parkeinheit kann weiterhin, dadurch gekennzeichnet sein, dass sie/es einen ersten Flüssigkeitsanschluss, zum Einspeisen einer Flüssigkeit in die Wanne oder/und einen zweiten Flüssigkeitsanschluss für den Überlauf und Abfluss aus der Wanne aufweist, vorzugsweise der Abfluss ein Überlaufstutzen ist.

In weiteren Ausführungsformen kann die Parkeinheit, dadurch gekennzeichnet sein, dass der erste und/oder der zweite Flüssigkeitsanschluss mit einem oder mehreren Schläuchen verbunden ist und/oder diese mit Auffangmitteln, vorzugsweise einem oder mehreren Vorratsmitteln, vorzugsweise einem Vorratsreservoir, verbunden sind und/oder mindestens einer der Schläuche mit eine Pumpe zur Befüllung der Wanne verbunden ist.

Weiterhin kann die Parkeinheit, dadurch gekennzeichnet sein, dass die Wanne eine Fase aufweist, die vorzugsweise umlaufend ist oder/und einen Winkel von 40 bis 50°, vorzugsweise von 45°, aufweist oder/und eine Länge von 2 bis 4mm, vorzugsweise von 3mm aufweist oder/und eine Tiefe von 10 bis 50 mm, vorzugsweise von 30 mm aufweist.

In einer bevorzugten Ausführungsform ist die Parkeinheit, dadurch gekennzeichnet, dass die Parkeinheit 2, 3, 4, 5, 6 Spiralfedern, aufweist.

Weiterhin kann die Parkeinheit, dadurch gekennzeichnet sein, dass die Parkeinheit einen Anschlag, vorzugsweise einen oberen Anschlag, aufweist, gegen den die Wanne mittels der Spiralfedern bewegbar ist.

In bevorzugten Ausführungsformen kann die Parkeinheit, dadurch gekennzeichnet sein, dass der Anschlag mittels Stellmitteln, vorzugsweise mittels Stellschrauben, justierbar ist und vorzugsweise der Abstand Druckkopf zu Oberkante der Wanne auf von 0,1 bis 5 mm, vorzugsweise von 0,4 bis 1 mm, mehr bevorzugt auf 0,5 mm, eingestellt ist.

In weiteren Ausführungsformen kann die Parkeinheit, dadurch gekennzeichnet sein, dass die Biegekraft oder Federkraft der Spiralfedern grösser ist als die Gewichtskraft der mit Flüssigkeit gefüllten Wanne, vorzugsweise dass die Biegekraft oder Federkraft um 10 bis 30 N, vorzugsweise mindestens 20 N, größer ist als die Gewichtskraft der mit Flüssigkeit gefüllten Wanne.

Das Konzept der Erfindung einer kontaktlosen Dichtung hat sich als besonders vorteilhaft erwiesen, da dadurch Nachteile des Kontaktes von Druckkopf und Capping-Schwamm vorteilhafter Weise vermeiden lassen. Überraschender Weise gelingt es auch mit dieser kontaktlosen Dichtung den Druckkopf im Ruhezustand oder zwischen zwei Druckprozessen genügend feucht zu halten, um seine Funktionsfähigkeit beizubehalten. Weiterhin wird durch das erfindungsgemäße Konzept Binderkonzentrierung, Verschmutzung und Unzuverlässigkeit vermindert oder ganz vermieden.

### Weitere Ausführungsformen

Die erfindungsgemäße Vorrichtung werden in einem System zum schichtweisen Aufbau von Modellen mit Tintenstrahldrucktechnik verwendet. Der Ablauf eines Fertigungsganges gliedert sich nach dem Stand der Technik wie folgt: Es wird eine Pulverschicht auf eine Bauplattform aufgetragen und nivelliert. Im Anschluss wird die Schicht gemäß der Schichtdaten des 3D-Modells mit einem Fluid bedruckt. Es kann ein Anteil des Materials zum Verkleben der Partikel im Pulver in Form von trockenen Partikeln vorgehalten werden. Nach dem Druckprozess wird die Bauplattform abgesenkt und der Prozess beginnt von vorne. Wahlweise und in bestimmten Druckmaschinenaufbauten kann auch die Druckeinheit und andere beim Druckprozess beteiligte Strukturen hochgefahren werden.

Diese Schritte werden solange wiederholt, bis das Bauteil komplett im mitgebauten Pulverkuchen vorliegt.

Der Druckkopf enthält mehrere Düsen. Je nach Ausführung können das mehrere 10.000 sein. Diese Düsen werden dazu verwendet, auf ein elektrisches Signal hin einzelne Tropfen zu erzeugen. Die Folge der Tropfen kann auf Grund des mikrotechnischen Aufbaus sehr schnell sein. Nach dem Stand der Technik sind hier 30 kHz und mehr als Tropfenerzeugungsfrequenz üblich.

Dieser Tropfenerzeugungsprozess funktioniert nur, wenn gewisse Randbedingungen eingehalten werden.

Die Pumpkammern, in denen der Druckstoß für den Tropfen durch einen Piezokristall erzeugt wird, dürfen keine Luft enthalten. Die Luft würde sich komprimieren lassen und so eine Ausbreitung eines Druckstoßes verhindern. Trotz Signal würde sich an der entsprechenden Düse kein Tropfen bilden. Die Luft kann beispielsweise im Fluid gelöst sein und erst in der Pumpkammer in Erscheinung treten.

Ebenso stören Verschmutzungen den Tropfenerzeugungsprozess. Dies können beispielsweise Partikel aus dem Bauprozess sein. Diese können als Staub im Bauraum umherfliegen oder beispielsweise durch den Beschuss des Druckkopfes auf das Baufeld selbst aufgewirbelt werden und am Druckkopf haften bleiben. Sind die Partikel in der Nähe der Düse, stören sie die Präzision des Tropfenfluges. Ist ein Partikel direkt in einer Düse, wird die Tropfenbildung komplett unterbunden.

Ebenso schädlich für die Funktion sind verdickte oder klebrige Fluide. Beispielsweise kann durch Abdampfen von Lösemittel im Bereich der Düse das Fluid sich lokal soweit verdicken, dass kein Tropfen mehr erzeugt werden kann. Ebenso kann das Fluid durch Abdampfen soweit verdicken, dass es einen unlösbaren Pfropfen in der Düse bildet und diese dauerhaft schädigt.

Um den Druckkopf vor dem Austrocknen zu schützen, wird nach dem Stand der Technik ein Capping verwendet. Wie der englische Begriff sagt, wird hier eine Kappe auf den Druckkopf gesetzt, die einen Luftabschluss bildet oder ein Verdampfen der Druckflüssigkeit verhindert.

Das Capping weist nicht gemäß der Erfindung eine Dichtung auf, die auf die Unterseite des Druckkopfes aufgesetzt wird. Das Capping besteht hierzu aus einem Stempel, der von unten auf den Druckkopf gedrückt wird. Dazu wird der Druckkopf in die Capping-Position gebracht und der Stempel von unten an den Druckkopf herangeführt. Der Stempel kann beispielsweise durch einen Pneumatikzylinder oder eine Mechanik betätigt werden, die durch die Bewegung des Druckkopfes ausgelöst wird.

Um das Austrocknen zu verhindern, ist eine Capping-Flüssigkeit vorhanden.

Diese ist im Stempel oft durch einen Schwamm gebunden. Dieser wird mit dem Druckkopf im Bereich der Düsen in Kontakt gebracht.

Da die Düsen hochempfindlich gegenüber Verschmutzungen sind, müssen sowohl die Dichtung als auch der Schwamm frei von Verunreinigungen sein. Dazu weist das Capping meist einen Schieber auf. Dieser trennt den Schwamm und die Dichtung vom eigentlichen Bauraum des 3D-Druckers.

Durch die Verwendung klebriger Binder oder Fluide, die beim Trocknen klebrig werden, werden alle mechanisch beweglichen Bauteile stark beeinflusst. Vorrichtungen des Standes der Technik weisen oft Probleme mit hängenden Schiebern oder verklemmter Mechanik auf. Dabei können im schwerwiegendsten Fall Dichtungen beschädigt oder abgerissen werden.

Alle Funktionen zur Druckkopfwartung während des Prozesses sind mechanisch aufwändig und anfällig gegenüber prozesstechnisch bedingten Verschmutzungen.

Erfindungsgemäß soll die Verschmutzungsneigung, der Dichtungskontakt und die räumliche Ausdehnung der Elemente reduziert werden.

Dies wird durch eine wannenförmige Vorrichtung erreicht, deren Oberkante knapp unterhalb der Unterkante des Druckkopfes liegt. Erfindungsgemäß sind hier Abstände von kleiner 5 mm, bevorzugt kleiner 3 mm und besonders bevorzugt kleiner 1 mm sinnvoll.

Dadurch wird erreicht, dass eine Spaltdichtung realisiert wird. Wenig Material vom Bauraum des 3D-Druckers kann in die Wartungseinheit gelangen und wenig Dampf aus der Wartungseinheit kann aus der Wartungseinheit entkommen.

Der Spalt sollte so gering wie möglich ausfallen. Der Druckkopf fährt mit seinem Achssystem über die wannenartige Wartungseinheit. Dabei sollte er die Oberkante der Wartungseinheit nicht berühren. Die Oberkante kann zum Einen Verschmutzungen aufweisen, zum Zweiten kann ein bloßes Berühren den Druckkopf bereits zerkratzen und funktional schädigen.

Auf Grund der Fertigungstoleranzen kann der Spalt nicht beliebig reduziert werden. Zudem können Wärmedehnungen oder chemisches Quellen die Dimensionen von Vorrichtungsteilen verändern und damit wieder auf den Spalt wirken. Versuche zeigen, dass 0,5 mm Spalt bei Druckköpfen mit Bodenflächenabmessungen von rund 200 x 200 mm erfindungsgemäß besonders geeignet sind.

Eine solche Vorrichtung kann, wenn sie eine Flüssigkeitsmenge enthält, trotz des passiven Charakters bereits als Capping für den Druckkopf dienen. Das in der Wanne verdampfende Medium entweicht nur langsam durch den Spalt. Der Druckkopf bleibt eine gewisse Zeit lang vor dem Austrocknen geschützt.

Die Schutzzeit kann wesentlich verlängert werden, wenn eine Flüssigkeitszuführung vorgesehen ist. Erfindungsgemäß kann in der Wanne ein Zulauf vorgesehen sein. In diesen Zulauf kann Capping-Flüssigkeit mit einer Pumpe gefördert werden. Dabei ist es hilfreich, den Flüssigkeitspegel zu begrenzen, damit der Druckkopf oder der Rest der Vorrichtung nicht versehentlich geflutet wird. Es kann ein Ablauf vorgesehen werden, dessen Einlaufkante den Flüssigkeitsspiegel definiert.

Kommt es in der Vorrichtung zu irgendwelchen unvorhergesehenen Deformationen oder Verschmutzungen über das normale Maß hinaus, kann es trotz des vorgesehenen Spaltes zwischen Parkeinheit und dem Druckkopf zu einer Kollision kommen.

Die Wirkung einer solchen Kollision kann gemildert werden, indem die Wartungseinheit federnd gelagert ist. Kollidiert sie mit dem Druckkopf, wird sie nach unten weggedrückt. Dieses Wegdrücken kann zusätzlich detektiert werden und der Produktionsprozess gestoppt werden.

Die beschriebene Wanne kann weitere Elemente der Druckkopfwartung aufnehmen (nicht Teil der Erfindung). Beispielsweise kann die Wanne direkt genutzt werden, um das Fluid beim Spülen (Purging) des Druckkopfes aufzunehmen. Die Flüssigkeit, die dabei durch den Kopf gedrückt wird, fließt dann über die Wanne ab. Wenn das Fluid aus dem Druckkopf geeignet ist, kann es gleichzeitig für die Feuchthaltung / Aufrechterhaltung der Atmosphäre im Capping genutzt werden.

Ebenso kann eine Reinigung in die Wanne integriert sein (nicht Teil der Erfindung). In einfachsten Fall wird eine Wischlippe mit integriert. Diese steht etwas über die Oberkante der Wanne über. Überfährt der Druckkopf die Lippe, werden am Druckkopf hängende Tropfen abgezogen. Die Flüssigkeit läuft über den Ablauf der Wanne ab. Zusätzlich können Flüssigkeitsdüsen integriert sein, die nach dem Prozess des Abwischens die Wischlippe abduschen und damit wieder reinigen. Die Wischlippe sollte weich sein und den Druckkopf auf der gesamten Länge sicher kontaktieren. Der Überstand ist kleiner 2 mm, bevorzugt kleiner 1 mm, besonders bevorzugt kleiner 0,5 mm. Die Lippe sollte bei der Überfahrt des Druckkopfes leicht gebogen werden. Idealerweise ist sie im Querschnitt rechteckig, und durch die Verbiegung entsteht eine linienartige Berührung. Da die Lippe den Druckkopf berührt, steht sie je nach gewählten Abmessungen mehr oder weniger über die Oberkante der Wartungseinheit hinaus.

Auch kann die Vorrichtung eine Struktur bereitstellen (nicht Teil der Erfindung), die das freie Herumfliegen von Tropfen des Spittings verhindert. Diese Struktur ist in der Wanne und knapp unter den Düsen angeordnet. Ein Abstand von der Düse zu einer Fläche der Struktur von 3 mm hat sich hierbei als nützlich erwiesen. Die erzeugten Mikrotropfen treffen auf die Fläche und sammeln sich dort. Die Fläche sollte so geneigt sein, dass die sich sammelnde Flüssigkeitsmenge irgendwann abfließt.

### Kurze Beschreibung der Figuren

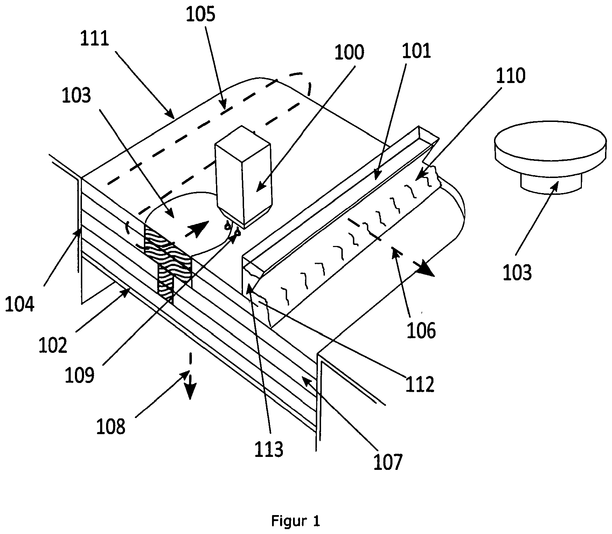

- Figur 1:: Schematische Darstellung der Komponenten eines pulverbasierten 3D-Druckers als geschnittener Schrägriss
- Figur 2:: Schema des Ablaufes eines konventionellen 3D-Druckprozesses

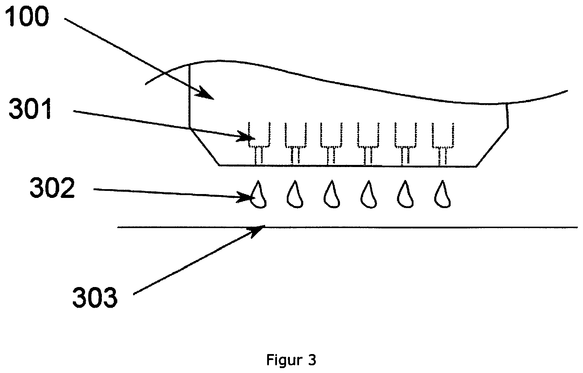

- Figur 3:: Illustration des Druckkopfes bei der Ausbringung von Einzeltropfen auf das Substrat

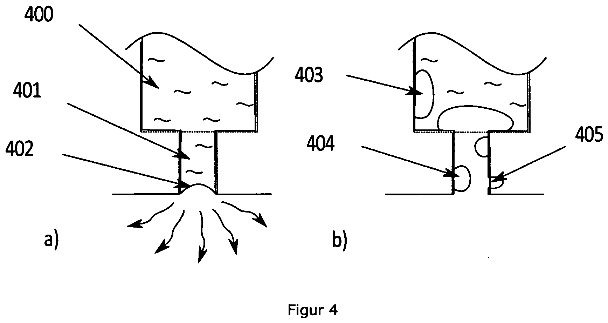

- Figur 4:: Darstellung der Vorgänge innerhalb einer Düse, wenn der Druckkopf durch Abdampfen von Flüssigkeit austrocknet

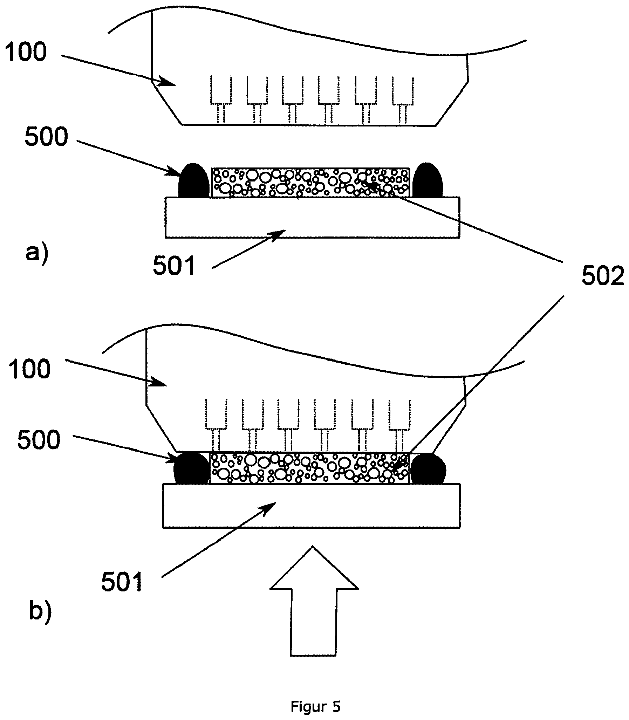

- Figur 5:: Darstellung eines Capping-Prinzips gemäß dem Stand der Technik

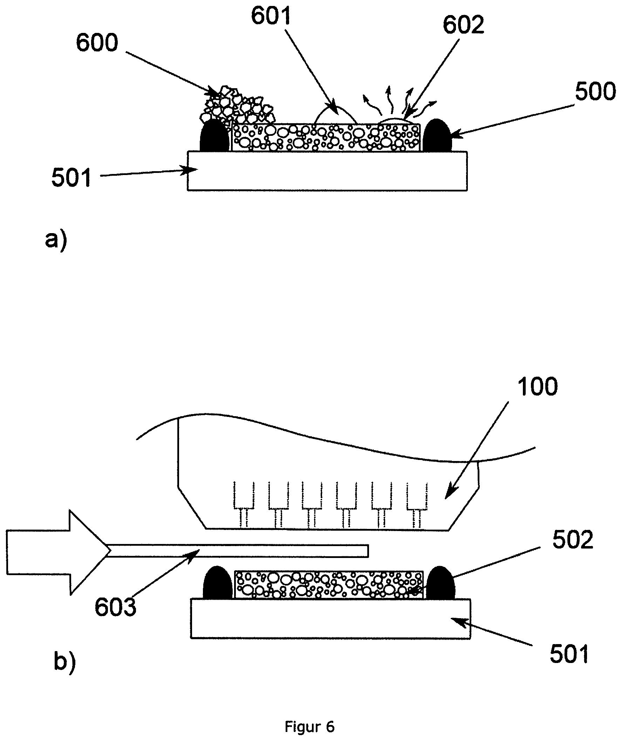

- Figur 6:: Einflüsse auf das ungeschützte Capping während des Druckprozesses/ Gefahren für den Druckkopf

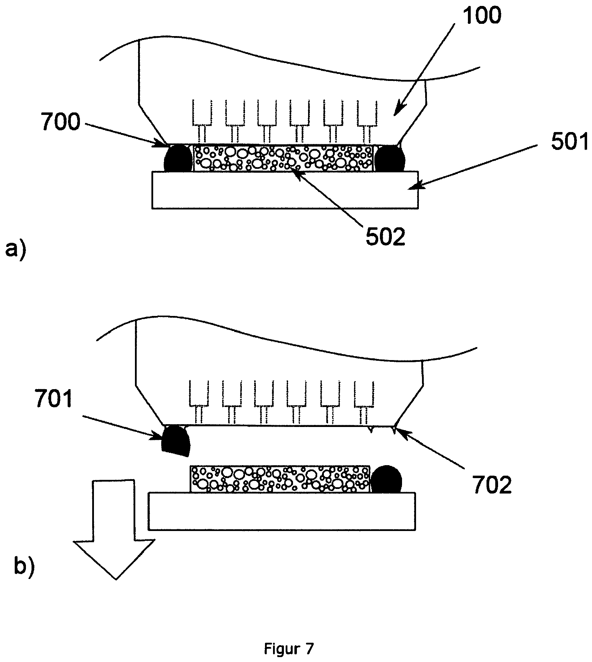

- Figur 7:: Problemstellungen durch Abtrocknen von Binder an einer berührenden Dichtung

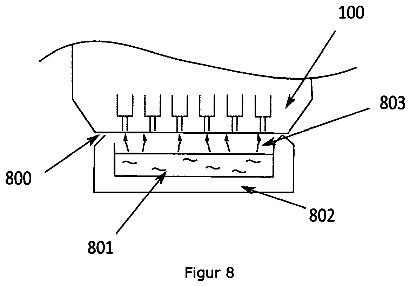

- Figur 8:: Darstellung der Möglichkeit, ein Capping auszuführen, ohne eine berührende Dichtung zu verwenden

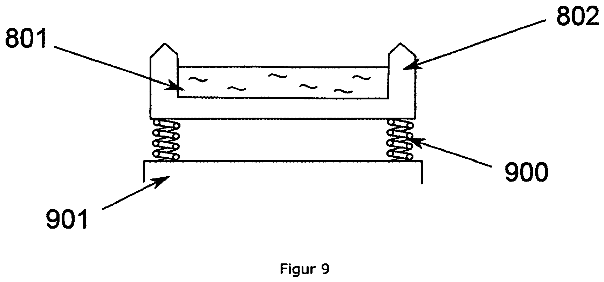

- Figur 9:: Schutz des Druckkopfes bei einer Kollision mit einem falsch einjustierten Capping

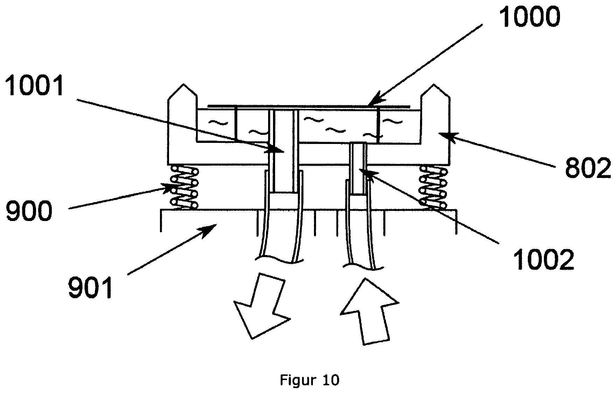

- Figur 10:: Fluidsystem zur Realisierung des Capping-Prinzips.

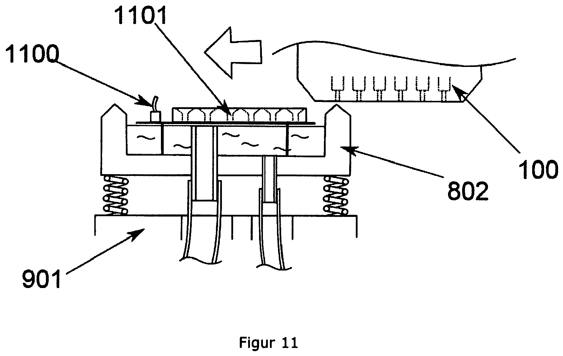

- Figur 11:: Integration mehrerer Funktionen in den geschützten, spaltgedichteten Raum (nicht Teil der Erfindung)

### Ausführungsbeispiel

Das im Folgenden erläuterte Beispiel dient der Erklärung der erfindungsgemäßen Vorrichtung. Es soll die möglichen Ausführungen der Erfindung nicht einschränken.

Die erfindungsgemäße Parkeinheit kann bei Vorrichtungen und Verfahren eines pulverbasierten 3D-Druck verwendet werden. Die Vorrichtung kann eine Kombination mit einer Vorrichtung zum pulverbettbasierten 3D-Drucken sein.

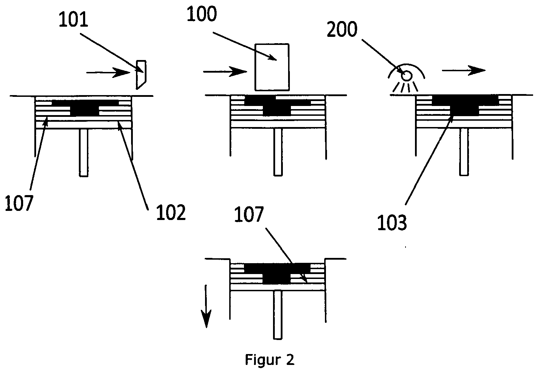

Die 3D-Druck-Vorrichtung weist einen Pulverbeschichter (101) auf. Mit diesem wird Partikelmaterial auf eine Bauplattform (102) aufgebracht und geglättet (Figur 2(a)). Das aufgebrachte Partikelmaterial kann aus verschiedensten Materialien bestehen. Beispielsweise können Formgrundstoffe wie Sande, künstliche Sande und keramische Partikel verwendet werden. Die Fließeigenschaften dieser Materialien können stark unterschiedlich ausfallen. Verschiedene Beschichtertechniken lassen die Schichtbildung von trockenen frei fließenden Pulvern über kohäsive schnittfeste Pulver bis hin zu flüssigkeitsbasierten Dispersionen zu. Die Höhe der Pulverschichten (107) wird durch die Bauplattform (102) bestimmt. Sie wird vor dem Aufbringen einer Schicht abgesenkt. Beim nächsten Beschichtungsvorgang wird das entstandene Volumen verfüllt und der Überstand glattgestrichen. Das Ergebnis ist eine nahezu perfekt parallele und glatte Schicht definierter Höhe.

Nach einem Beschichtungsprozess wird die Schicht mittels eines Tintenstrahldruckkopfes (100) mit einer Flüssigkeit bedruckt (Figur 2(b)). Das Druckbild entspricht dem Schnitt durch das Bauteil in der aktuellen Bauhöhe der Vorrichtung. Die Flüssigkeit trifft auf das Partikelmaterial und diffundiert langsam hinein.

Der Druckkopf wird innerhalb des Bauprozesses mehrfach gewartet. Dies kann vor oder nach dem Drucken oder parallel zu einem anderem Schritt, beispielsweise dem Beschichten, stattfinden. Die Wartung besteht üblicherweise aus einem Durchspülen (Purging), einer Reinigung und dem Spitting.

Nach dem Drucken des Binders kann die Schicht optional erwärmt werden (Figur 2(c)). Dazu kann beispielsweise ein IR-Strahler (200) über das Baufeld geführt werden. Dieser kann mit der Achse des Beschichtungssystems gekoppelt sein. Während des Heizens verdampft ein Teil des flüssigen Bindemittels (803).

Im Anschluss an diesen Heizprozess wird die Bauplattform (102) um eine Schichtstärke abgesenkt. Die Schritte Schichtbilden, Bedrucken, Erwärmen und Absenken werden nun solange wiederholt, bis das gewünschte Bauteil (103) vollständig erstellt ist.

Nach dem Bauprozess wird der Druckkopf gecappt. Dieser Prozess ist notwendig, wenn der 3D-Drucker nicht sofort nach dem Bauprozess einen Folgeprozess beginnt.

Erfindungsgemäß weist der Drucker eine Parkeinheit auf, die eine Spaltdichtung (800) realisiert.

Die Parkeinheit besteht aus einer Kunststoffwanne (802). Die Kontur der Wanne ist gefräst. Die Oberkante der Wanne weist eine umlaufende Fase mit einem Winkel von 45° und einer Länge von 3 mm auf. Die Wanne (802) ist 30 mm tief ausgefräst.

Die Wanne (802) ist über Spiralfedern (900) mit dem feststehenden Teil (901) des Druckers verbunden. Dabei drücken die Federn (900) die Wanne (802) gegen einen oberen Anschlag. Die Federkraft übersteigt insgesamt die Gewichtskraft der gefüllten Wanne um 20 N. Es sind vier Federn vorgesehen.

Der obere Anschlag kann über Schrauben eingestellt werden. Dadurch kann die Wanne relativ zum Druckkopf exakt einjustiert werden. Der Abstand von der Oberkante der Wanne zum Druckkopf wird auf 0,5 mm justiert.

Die Wanne weist einen Anschluss (1002) für die Capping-Flüssigkeit (801) auf. Dieser mündet unterhalb der Wanne in einem Schlauch, der mit einer Pumpe und einem Vorratsreservoir der Maschine verbunden ist.

Ein zweiter Anschluss ist für den Überlauf der Flüssigkeit (1001) aus der Wanne (802) vorgesehen. Dieser Anschluss mündet ebenso in einem Schlauch, der einen größeren Durchmesser als der Zulaufschlauch aufweist. Der Überlaufstutzen steht über dem Boden der Wanne ca. 20 mm über. Damit kann der Füllstand nicht über 20 mm steigen, da sonst die eingepumpte Flüssigkeit sofort wieder abfließt.

Ca. 2 mm oberhalb des Überlaufstutzens ist eine Platte angebracht (1000). Diese stellt den Schwappschutz dar. Dadurch wird verhindert, dass bei einer Kollision Fluid aus der Wanne in Richtung des Druckkopfes spritzt.

Teil des Schwappschutzes ist ein Träger für eine Wischlippe (1100) (nicht Teil der Erfindung). Diese ist so bemessen, dass sie die Unterkante des Druckkopfes ca. 0,5 mm überragt. Sie ist 1 mm stark und biegt sich bei der Druckkopfüberfahrt weg. Bedingt durch ihr Rechteckprofil wischt die Lippe mit einer Linienberührung den Druckkopf ab.

Ebenso oberhalb des Schwappschutzes ist die Spitting-Struktur (1101) angebracht. Diese besteht aus einer Reihe von Langlöchern in einem Kunststoffblock. Die Langlöcher sind 45° angefast. Die Fasen sind die Funktionsflächen, und deren Abstand korreliert mit der Anordnung der Düsenreihen des Tintenstrahldruckkopfes. Der Abstand zur Spitting-Struktur (1101) beträgt rund 1,5 mm. Der Flugabstand eines Tropfens zur Fase rund 3 mm.

Ein Wartungsprozess während eines Druckprozesses wird wie folgt ausgeführt (nicht Teil der Erfindung):
Der Druckkopf fährt auf die Position der Wanne (802). Dabei ist die rechteckige Grundfläche des Druckkopfes (100) über der rechteckigen Fläche der Wanne (802) zentriert.

Zur Spülung wird an den Tank im Druckkopf ein Überdruck angelegt. Die Düsen (301) werden jetzt mit einer großen Fluidmenge gespült. Dabei sollen evtl. im Fluidsystem vorhandene Luftblasen (403) mitgenommen werden. Ein Überdruck von 0,4 Bar wird für rund 1 Sekunde angelegt. Dabei werden rund 20-30 g Fluid in die Wanne gespült.

Das Fluid läuft durch die Spitting-Struktur (1101) in die Wanne (802). Ist das Capping bereits gefüllt, fließt eine äquivalente Menge Flüssigkeit aus dem Überlaufstutzen (1001).

Im Anschluss wird der Druckkopf (100) über die Wischlippe (1100) bewegt. Durch die Bewegung werden die nach dem Spülen noch am Druckkopf (100) hängenden Tropfen abgezogen. Die Lippe (1100) biegt sich bei der Bewegung, und die Kante des Wischers (1100) sorgt für einen innigen Kontakt, durch den der Druckkopf (100) rückstandarm abgezogen wird.

In der Rückwärtsfahrt zieht die Lippe (1100) den Druckkopf (100) noch einmal ab. Nach der Reinigung wird der Druckkopf betätigt. Dazu werden einige Tropfen erzeugt. Damit ist der Druckkopf, wenn er am Baufeld der Vorrichtung ankommt, bereits im eingefahrenen Zustand.

Die erzeugten Tropfen (302) treffen auf die Fase der Spitting-Struktur (1101). An dieser Fase sammeln sie sich so lange, bis die Menge groß genug ist, dass ein großer Tropfen aus vielen Mikrotröpfchen abrutscht und in die Wanne (802) abtropft.

Nach dem Spitting ist der Wartungsprozess beendet und der Druckkopf kann wieder in den Produktivbetrieb gehen.

Nach dem vollständigen Bauprozess wird der Druckkopf wieder über die Wartungsvorrichtung (Position der Wanne (802)) gefahren. Damit ist der Druckkopf vor dem Austrocknen geschützt. Ebenso könne Stäube (600), die bei jetzt folgenden Prozessen wie dem Entnehmen des Baubehälters (104) aus dem 3D-Drucker nicht verschmutzen.

Die Flüssigkeit (801) in der Wanne trocknet über einen langen Zeitraum ab. Versuche zeigen, dass bei obiger Anordnung und Wasser als Capping-Fluid der Druckkopf ohne weitere Aktionen rund 1 Woche feucht bleibt.

Diese Zeit kann beliebig verlängert werden, indem Fluid in die Wanne gepumpt wird. Damit kann durch steuerungstechnische Automatisierung eine Stillstandzeit des Druckers von mehreren Wochen überbrückt werden.

### Bezugszeichenliste

- 100: Druckkopf
- 101: Beschichter
- 102: Bauplattform
- 103: Bauteil
- 104: Baubehälter
- 105: Druckkopfbahn
- 106: Beschichterbahn
- 107: Pulverschichten
- 108: Richtung der Bauplattformbewegung
- 109: Dosierte Tropfen
- 110: Pulverwalze
- 111: Baufeldberandung
- 112: Beschichterspalt
- 113: Beschichtervorrat
- 200: IR-Strahler
- 301: Düsen
- 302: Tropfen
- 303: Substrat / Partikelmaterialschicht
- 400: Pumpkammer
- 401: Düsenkanal
- 402: Meniskus
- 403: Lufteinschluss
- 404: Trocknungsrückstand
- 405: Korrosionsangriff
- 500: Dichtung
- 501: Stempel
- 502: Schwamm
- 600: Partikelmaterial-Verschmutzung
- 601: Fluidverschmutzung
- 602: Capping-Rückstand
- 603: Abdeckschieber
- 700: Binderverschmutzung
- 701: Abgerissene Dichtung
- 702: Binderrückstand ausgehärtet
- 800: Spaltdichtung
- 801: Capping-Fluid / Flüssigkeit
- 802: Capping-Wanne
- 803: Fluiddampf
- 900: Feder
- 901: Gestell
- 1000: Schwappschutz
- 1001: Überlauf-Siphon / Ablauf
- 1002: Zulauf
- 1100: Wischlippe
- 1101: Spitting-Struktur

## Patentansprüche

1. Parkeinheit für Druckköpfe (100), wobei die Parkeinheit eine Wanne (802) aufweist, die dicht ist und mit einer Flüssigkeit (801) befüllbar ist, und wobei die Parkeinheit dazu ausgebildet ist eine Spaltdichtung zum Druckkopf (100) aufzuweisen, **dadurch gekennzeichnet, dass** die Parkeinheit Federn (900) oder Spiralfedern zur Befestigung aufweist.

2. Parkeinheit nach Anspruch 1, **dadurch gekennzeichnet, dass** sie einen Flüssigkeitszu- und ablauf und/oder einen Schwappschutz oder/und ein Spitting-Struktur oder/und ein Mittel zum Entfernen von Flüssigkeit vom Druckkopf aufweist, vorzugsweise
**dadurch gekennzeichnet, dass** sie einen ersten Flüssigkeitsanschluss, zum Einspeisen einer Flüssigkeit in die Wanne oder/und einen zweiten Flüssigkeitsanschluss für den Überlauf und Abfluss aus der Wanne aufweist, vorzugsweise der Abfluss ein Überlaufstutzen ist.

3. Parkeinheit nach Anspruch 2, **dadurch gekennzeichnet, dass** der erste und/oder der zweite Flüssigkeitsanschluss mit einem oder mehreren Schläuchen verbunden ist und/oder diese mit Auffangmitteln, vorzugsweise einem oder mehreren Vorratsmitteln, vorzugsweise einem Vorratsreservoir, verbunden sind und/oder mindestens einer der Schläuche mit eine Pumpe zur Befüllung der Wanne verbunden ist.

4. Parkeinheit nach Anspruch 2 oder 3, **dadurch gekennzeichnet, dass** die Wanne eine Fase aufweist, die vorzugsweise umlaufend ist oder/und einen Winkel von 40 bis 50°, vorzugsweise von 45°, aufweist oder/und eine Länge von 2 bis 4mm, vorzugsweise von 3mm aufweist oder/und eine Tiefe von 10 bis 50 mm, vorzugsweise von 30 mm aufweist.

5. Parkeinheit nach Anspruch 4, **dadurch gekennzeichnet, dass** die Einheit 2, 3, 4, 5, 6 Spiralfedern aufweist, vorzugsweise
**dadurch gekennzeichnet, dass** die Einheit einen Anschlag, vorzugsweise einen oberen Anschlag, aufweist, gegen den die Wanne mittels der Spiralfedern bewegbar ist, vorzugsweise
**dadurch gekennzeichnet, dass** der Anschlag mittels Stellmitteln, vorzugsweise mittels Stellschrauben, justierbar ist und vorzugsweise der Abstand Druckkopf zu Oberkante der Wanne auf von 0,1 bis 5 mm, vorzugsweise von 0,4 bis 1 mm, mehr bevorzugt auf 0,5 mm, eingestellt ist.

6. Parkeinheit nach einem der vorhergehenden Ansprüche, **dadurch gekennzeichnet, dass** die Biegekraft oder Federkraft der Spiralfedern grösser ist als die Gewichtskraft der mit Flüssigkeit gefüllten Wanne, vorzugsweise dass die Biegekraft oder Federkraft um 10 bis 30 N, vorzugsweise mindestens 20 N, größer ist als die Gewichtskraft der mit Flüssigkeit gefüllten Wanne.

## Claims

1. Parking unit for print heads (100), wherein the parking unit has a trough (802) which is sealed and can be filled with a liquid (801), and wherein the parking unit is designed to have a gap seal to the print head (100), **characterised in that** the parking unit has springs (900) or coil springs for fastening.

2. The parking unit according to claim 1 or 2, **characterized in that** it comprises a liquid inlet and outlet and/or an anti-spill element or/and a spitting structure or/and a means for removing liquid from the print head, preferably **characterized in that** it comprises a first liquid connection for feeding a liquid into the trough or/and a second liquid connection for overflow and draining from the trough, the drain preferably being an overflow connection.

3. The parking unit according to claim 2, **characterized in that** the first and/or the second liquid connection is connected to one or more flexible tubes and/or the latter are connected to catchment means, preferably one or more storage means, preferably a storage reservoir, and/or at least one of the flexible tubes is connected to a pump for filling the trough.

4. The parking unit according to claim 2 or 3, **characterized in that** the trough has a chamfer, which is preferably circumferential or/and has an angle of 40 to 50°, preferably of 45°, or/and a length of 2 to 4 mm, preferably of 3 mm, or/and a depth of 10 to 50 mm, preferably of 30 mm.

5. The parking unit according to claim 4, **characterized in that** the unit comprises 2, 3, 4, 5, or 6 coil springs, preferably **characterized in that** the unit comprises a stop, preferably an upper stop, against which the trough can be moved by the coil springs, preferably **characterized in that** the stop is adjustable by adjusting means, preferably by means of adjusting screws, and the distance from the print head to the upper edge of the trough is preferably set to 0.1 to 5 mm, preferably 0.4 to 1 mm, more preferably 0.5 mm.

6. The parking unit according to any one of the preceding claims, **characterized in that** the bending force or spring force of the coil springs is greater than the weight force of the trough filled with liquid, preferably **in that** the bending force or spring force is 10 to 30 N, preferably at least 20 N, greater than the weight force of the trough filled with liquid.

## Revendications

1. Unité de stationnement pour têtes d'impression (100), l'unité de stationnement
comprenant un bac (802) qui est étanche et peut être rempli d'un liquide (801), et l'unité de stationnement étant conçue pour présenter un joint d'étanchéité à fente par rapport à la tête d'impression (100), **caractérisée en ce que** l'unité de stationnement comprend des ressorts (900) ou des ressorts en spirale pour la fixation.

2. Unité de stationnement selon la revendication 1, **caractérisée en ce qu'**elle comprend une entrée et une sortie de liquide et/ou une protection contre les débordements ou/et une structure de pulvérisation ou/et un moyen pour retirer le liquide de la tête d'impression, de préférence **caractérisée en ce qu'**elle comprend un premier raccord de liquide pour l'alimentation d'un liquide dans le bac ou/et un deuxième raccord de liquide pour le débordement et l'évacuation du bac, et de préférence le dispositif d'évacuation est une tubulure de débordement.

3. Unité de stationnement selon la revendication 2, **caractérisée en ce que** le premier et/ou le deuxième raccord de liquide est relié à un ou plusieurs tuyaux flexibles et/ou ceux-ci sont reliés à des moyens de collecte, de préférence un ou plusieurs moyens de stockage, de préférence un réservoir de stockage, et/ou au moins un des tuyaux flexibles est relié à une pompe pour le remplissage du bac.

4. Unité de stationnement selon la revendication 2 ou 3, **caractérisée en ce que** le bac présente un chanfrein qui est de préférence périphérique ou/et présente un angle de 40 à 50°, de préférence de 45°, ou/et présente une longueur de 2 à 4 mm, de préférence de 3 mm, ou/et présente une profondeur de 10 à 50 mm, de préférence de 30 mm.

5. Unité de stationnement selon la revendication 4, **caractérisée en ce que** l'unité comporte 2, 3, 4, 5, ou 6 ressorts en spirale, de préférence **caractérisée en ce que** l'unité comporte une butée, de préférence une butée supérieure, contre laquelle le bac peut être déplacé au moyen des ressorts en spirale, caractérisé de préférence **en ce que** la butée est ajustable à l'aide de moyens de réglage, de préférence à l'aide de vis de réglage, et de préférence **en ce que** la distance entre la tête d'impression et le bord supérieur du bac est réglée de 0,1 à 5 mm, de préférence de 0,4 à 1 mm, plus préférablement à 0,5 mm.

6. Unité de stationnement selon l'une quelconque des revendications précédentes, **caractérisée en ce que** la force de flexion ou la force élastique des ressorts en spirale est supérieure à la force de poids du bac rempli de liquide, de préférence **en ce que** la force de flexion ou la force élastique est supérieure de 10 à 30 N, de préférence d'au moins 20 N, à la force de poids du bac rempli de liquide.
